(19) Europäisches Patentamt
European Patent Office
Office européen des brevets

(11) **EP 2 905 478 B1**

(12) **EUROPEAN PATENT SPECIFICATION**

(45) Date of publication and mention
of the grant of the patent:
**29.11.2017 Bulletin 2017/48**

(51) Int Cl.:
*F04F 5/46* (2006.01)          *F04F 5/10* (2006.01)
*F04F 5/54* (2006.01)          *G21C 15/25* (2006.01)

(21) Application number: **15154098.6**

(22) Date of filing: **06.02.2015**

(54) **Vibration suppression device for jet pump and jet pump**

Schwingungsunterdrückungsvorrichtung für Wärmepumpe sowie Strahlpumpe

Dispositif de suppression de vibration pour pompe à jet et pompe à jet

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.02.2014 JP 2014022677**

(43) Date of publication of application:
**12.08.2015 Bulletin 2015/33**

(73) Proprietor: **Kabushiki Kaisha Toshiba**
**Tokyo 105-8001 (JP)**

(72) Inventors:
• **Watanabe, Masanobu**
**Tokyo, 105-8001 (JP)**
• **Matsukawa, Kozue**
**Tokyo, 105-8001 (JP)**

• **Shioyama, Tsutomu**
**Tokyo, 105-8001 (JP)**
• **Kinugasa, Kunihiko**
**Tokyo, 105-8001 (JP)**
• **Takeyama, Daiki**
**Tokyo, 105-8001 (JP)**

(74) Representative: **Moreland, David et al**
**Marks & Clerk LLP**
**Aurora**
**120 Bothwell Street**
**Glasgow G2 7JS (GB)**

(56) References cited:
**EP-A2- 2 778 434          JP-A- 2010 242 581
US-A1- 2002 106 281      US-A1- 2012 156 060
US-B2- 8 197 225**

**Description**

BACKGROUND OF THE INVENTION

Field of the Invention

The present invention relates to a vibration suppression technology for a jet pump, particularly of a boiling water reactor, that suppresses a self-excited vibration caused by a leak flow in a slip joint without requiring replacement of components of the jet pump.

Description of the Related Art

A boiling water reactor incorporates a plurality of jet pumps disposed at intervals along a circumferential direction in an annular space between a reactor pressure vessel and a core shroud inside the reactor pressure vessel. Each of the jet pumps is a component of a recirculation system used for adjusting a core flow rate and is essentially composed of a riser pipe, an elbow member, an inlet mixer pipe and a diffuser.

The riser pipe is fixed by a riser brace welded to the wall of the reactor pressure vessel, and the diffuser is fixed to an annular pump deck at the lower end thereof. The inlet mixer pipe is supported by a riser bracket fixed to the riser pipe by means of a wedge and a set screw and coupled to the upper portion of the diffuser at the lower portion thereof with a slip joint.

The slip joint is formed with is a narrow clearance (slip clearance) that accommodates a thermal expansion and ensures an adjustment in installation of the jet pump. A leak flow occurs in the clearance because of the feeding pressure in the pump.

When the flow rate of the leak flow increases and exceeds a certain limit value, the clearance flow becomes unstable, and a vibration having a large amplitude, referred to as a self-excited vibration, occurs in the jet pump. It is hence required for the jet pump to be designed to prevent such a specific self-excited vibration from occurring under a normal operational condition.

On the other hand, although the amplitude of the vibration of the jet pump is small, a random vibration also occurs and disturbs the flow in the jet pump. The random vibration does not damage the jet pump main unit. However, if the jet pump is subjected to the random vibration for a long time, a wedge that fixes the inlet mixer pipe to the riser pipe or a set screw and a riser bracket may slide and become worn. If such sliding wear progresses, the rigidity of these components decreases, and the supporting capability of the inlet mixer pipe decreases. As a result, the limit flow rate at which the leak flow in the slip joint causes a self-excited vibration decreases, and the self-excited vibration is more likely to occur.

In the meantime, there is a known method of reducing wear and vibration of a wedge that allows the riser bracket fixed to the riser pipe to support the inlet mixer, the set screw or the riser bracket by providing an adjustment wedge.

In the United States, an attempt to increase the power of an existing nuclear power plant has already been carried out, and it is contemplated to increase the core flow rate. If the core flow rate is increased, the flow rate of the leak flow through the clearance in the slip joint also increases, and the self-excited vibration is more likely to occur.

In order to suppress self-excited vibrations caused by such leak flow in the slip joint, one known method suppresses vibration by alleviating the cause of self-excited vibration due to a leak flow, and another one known technology enhances the rigidity by increasing the number of support portions of the inlet pipe (for example, see Patent Document 1: Japanese Patent Laid-Open No. 2010-242581)

In a case of increasing the power of a nuclear power plant, if the core flow rate increases, the flow rate of a leak flow in a slip joint will also increase. Otherwise, even if the core flow rate does not increase, the flow rate of the leak flow in the slip joint increases in a case where the pressure loss of the diffuser increases because of cladding on the inner peripheral surface of the diffuser after a long period of operation or where the core pressure loss increases with time. Under such conditions, the possibility of occurrence of a self-excited vibration cannot be eliminated as far as the flow rate of the leak flow in the slip joint increases.

When the flow rate of the leak flow in the slip joint between the inlet mixer pipe and the diffuser of the jet pump increases and exceeds a certain limit value, the clearance flow becomes unstable, and a vibration having a large amplitude, referred to as a self-excited vibration, will occur.

As described in the Patent Document 1, a possible method for avoiding such occurrence of the self-excited vibration is to form the clearance in the slip joint into a stable flow channel shape, tapered in the direction of the leak flow, to thereby alleviate the cause of self-excited vibrations due to a leak flow and suppress vibration.

The shape of the leak flow channel which is tapered along the flow achieves a self-excited vibration suppression effect. However, this method involves a modification of the shape of the inlet mixer pipe, which may require replacement of the inlet mixer itself, thus being inconvenient.

It has become a prerequisite to suppress the risk of occurrence of self-excited vibrations in the case where the leak flow in the joint portion from the inside to the outside of the jet pump increases due to an increase in the core flow rate or core pressure loss. In actual plants, which are normally operated with two reactor recirculation pumps that feed a driving flow to the jet pump, a slight leak flow occurs in the slip joint from the inside to the outside of the jet pump even when there is no increase in core flow rate.

In a rare case, a plant is operated with only one reactor recirculation pump, which is referred to as single-pump operation. Under such conditions, the leak flow in the slip joint becomes a backward flow heading from the outside toward the inside of the jet pump instead of a normal forward flow heading from the inside toward the outside of the jet pump. In the case of the backward flow, the self-excited vibration cannot be suppressed from occurring by the flow channel having a shape formed to be tapered along the forward flow.

US2002/106281 describes a method for applying a lateral support load to a jet pump slip joint. The method includes positioning an ovalization device around the diffuser and actuating the ovalization device to apply a predetermined load to the slip joint which creates an oval deformation of the diffuser.

SUMMARY OF THE INVENTION

The present invention was conceived in consideration of the circumstances mentioned above and an object thereof is to provide a jet pump and a vibration suppressing device for a jet pump that can suppress a self-exited vibration caused by a leak flow in a slip joint, not only when a leak flow is a forward flow but also when it is a backward flow.

The above and other objects can be achieved according to the present invention by providing a vibration suppressing device and a jet pump, wherein the jet pump is located in a reactor pressure vessel of a boiling water reactor and provided with an inlet mixer pipe coupled to a riser pipe and a diffuser coupled to the inlet mixer pipe by means of a slip joint, and an inlet nozzle, wherein the vibration suppressing device is provided with an extension sleeve disposed on an upper portion of the diffuser of the jet pump and constitutes an extension flow channel on a downstream side of a forward leak flow in a slip clearance heading from the inside toward the outside of the jet pump formed between an inner peripheral surface of the diffuser and an outer peripheral surface of the inlet mixer pipe, and the extension sleeve has a shape such that the extension flow channel has a region in which a flow channel width thereof is constant over a length and wherein the flow channel width of the extension flow channel is more than zero and not more than 2.46 times as large as a minimum flow channel width of the slip clearance.

According to the embodiments of the present invention of the aspects described above, the self-excited vibration caused by a leak flow in a slip joint can be suppressed not only when the leak flow is a forward flow but also when it is a backward flow.

The nature and further characteristic features of the present invention will be made clearer from the following descriptions made with reference to the accompanying drawings.

BRIEF DESCRIPTION OF THE DRAWINGS

Fig. 1 is a view showing a vertical sectional structure of a boiling water reactor (BWR);
Fig. 2 is a schematic view showing a jet pump according to an embodiment provided in a reactor pressure vessel of the BWR;
Fig. 3 is a cross-sectional view taken along the line III-III in Fig. 2;
Fig. 4 is a cross-sectional view of an essential portion of a flat surface Ω, in Fig. 2, of a slip joint formed at a coupling portion of a diffuser and an inlet mixer pipe of the jet pump;
Fig. 5 is a vertical sectional view showing a vibration suppressing device for the jet pump according to a first embodiment of the present invention;
Fig. 6 is a perspective view showing an extension sleeve provided in the vibration suppressing device shown in Fig. 5 in a disassembled state (A) and an assembled state (B);
Fig. 7 is a view representing a relation, in a case of a forward flow, between a relative flow channel length and a limit flow rate for occurrence of a self-excited vibration, in which a relative flow channel width is specified;
Fig. 8 is a view representing a relation, in a case of a backward flow, between the relative flow channel length and the limit flow rate for occurrence of a self-excited vibration, in which the relative flow channel width is specified; and
Fig. 9 includes Fig. 9A and Fig. 9B, in which Fig. 9A is a vertical sectional view showing a second embodiment of a vibration suppressing device for a jet pump according to the present invention, and Fig. 9B is a cross-sectional top view of an extension sleeve installed on an inlet mixer pipe.

DESCRIPTION OF THE PREFERRED EMBODIMENT

Hereunder, embodiments of the present invention will be described with reference to the accompanying drawings. It is further to be noted that terms "upper", "lower", "right", "left" and the like terms indicating direction are used herein with reference to the accompanying drawings or in a case of actual usage.

[First Embodiment]

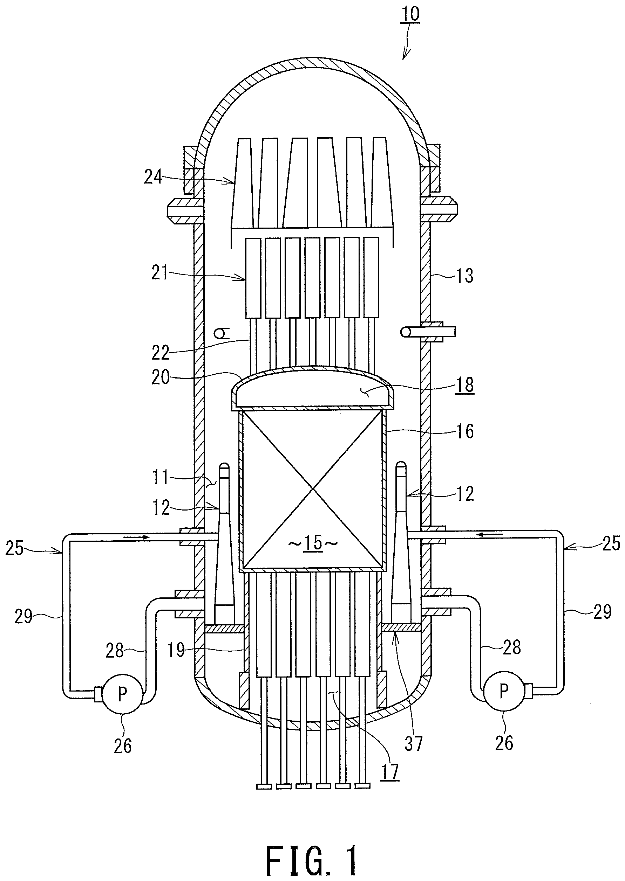

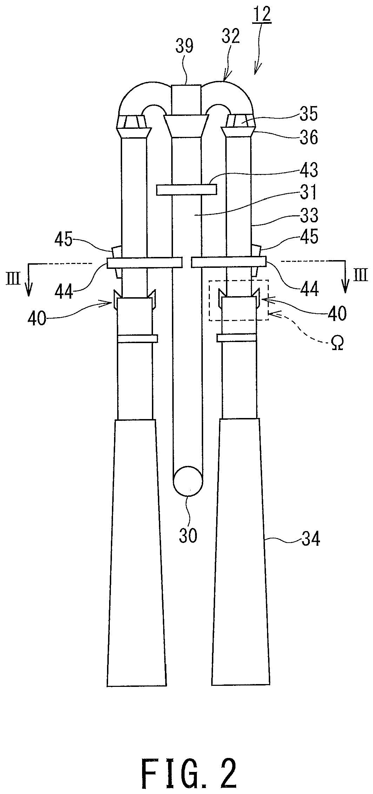

With reference to Figs. 1 and 2 showing a boiling water rector (BWR) 10 according to an embodiment of the present invention (Fig. 1) and a jet pump 12 (Fig. 2) provided in a downcomer section 11 of the BWR 10, a reactor core 15 is disposed in a reactor pressure vessel 13, and the downcomer section 11 is formed in a sleeve or annular shape between a core shroud 16 surrounding the reactor core 15 and the reactor pressure vessel 13.

In the downcomer section 11, a plurality of jet pumps 12 are disposed along the circumferential direction to cause forced circulation of a primary coolant in the reactor pressure vessel 13 from a core lower plenum 17 into the reactor core 15. The core shroud 16 is supported by a shroud supporting plate 19.

A shroud head 20 covering a core upper plenum 18 is disposed above the reactor core 15, and a steam separator 21 is disposed above the shroud head 20 with a stand pipe 22 interposed therebetween. A steam dryer 24 is disposed above the steam separator 21, and the steam dryer 24 dries the separated steam from the steam separator 21 and supplies the resulting dried steam to a steam turbine (not shown) as a main steam through a main steam line (system) to drive the steam turbine.

Outside the reactor pressure vessel 13, two reactor recirculation systems 25 are provided, and each of the reactor recirculation systems 25 is configured to cause forced circulation of the primary coolant in the reactor pressure vessel 13 into the reactor core 15 through the jet pumps 12 by the action of a reactor recirculation pump 26, which is an external pump, to thereby remove heat generated in the reactor core 15. The reactor recirculation system 25 controls the reactor thermal power (the amount of steam generated) by adjusting the pump rate of the reactor recirculation pump 26 to change the flow rate of the coolant supplied to the reactor core 15.

A plurality of jet pumps 12, sixteen or twenty jet pumps 12, for example, are disposed in the downcomer section 11 in the reactor pressure vessel 13. The plurality of jet pumps 12 arranged outside the reactor core 15 in the circumferential direction thereof cause forced circulation flow of the coolant in the reactor pressure vessel 13.

A driving fluid for the jet pump 12 is a discharge flow from the reactor recirculation pump 26, which is an external pump. The driving fluid is introduced to the reactor recirculation pump 26 from the downcomer section 11 in the lower portion of the reactor pressure vessel 13 through an intake pipe 28 to raise the pressure. The driving fluid raised in pressure by the reactor recirculation pump 26 passes through a discharge pipe 29 and is divided by header piping (not shown) into a plurality of branch flows, which are then introduced to the respective jet pumps 12.

The reactor recirculation pump 26 has a function of circulating reactor water, which serves as a coolant. The reactor water (driving fluid) discharged by the reactor recirculation pump 26 flows through the discharge pipe 29 to a riser pipe 31 of the jet pump 12 in the reactor pressure vessel 13, turns around at an elbow portion 32 and is introduced to an inlet nozzle 35. The inlet nozzle 35 guides the driving fluid along with reactor water (driven fluid) drawn in from the surrounding to an inlet mixer pipe 33, where the driving fluid is sufficiently mixed with the sucked-in fluid. The resulting mixed fluid restores pressure in a diffuser 34 and then is delivered to the reactor core 15 through the core lower plenum 17.

As shown in Fig. 2, the jet pump 12 essentially includes the riser pipe 31 that extends from a recirculation inlet nozzle 30 in the downcomer section 11 (Fig. 1), the elbow portions 32, having 180-degree bent part provided at the top of the riser pipe 31, inlet mixer pipes 33 disposed on the downstream side of the elbow portions 32, and diffusers 34 provided on the downstream side of the inlet mixer pipes 33.

The elbow parts 32 divide the driving fluid flowing up through the riser pipe 31 into left and right branch flows, cause the branch flows to turn around and guide the branch flows to the inlet nozzles 35.

The jet pump 12 includes the inlet nozzles 35 connected to the elbow portions 32 having a 180-degree bent part. The inlet mixer pipe 33 mixes the driving fluid and the driven fluid from a bell mouth 36, which guides the driven fluid (sucked-in fluid) drawn in by the driving fluid ejected from the inlet nozzle 35. The diffuser 34 is connected to the downstream side of the inlet mixer pipe 33. The diffuser 34 is fixed to the pump deck 37 at the lower end thereof.

The jet pump 12 is provided with mechanical fitting members 39 and 40 at inlets of the elbow portions 32 and the diffusers 34, and these fitting members 39 and 40 allow removal of the elbow portion 32, the inlet nozzle 35, the bell mouth 36, and the inlet mixer pipe 33 which are an integral structure.

The lower end portion of the inlet mixer pipe 33 is fitted into the upper portion of the diffuser 34 and serves as a slip joint 40.

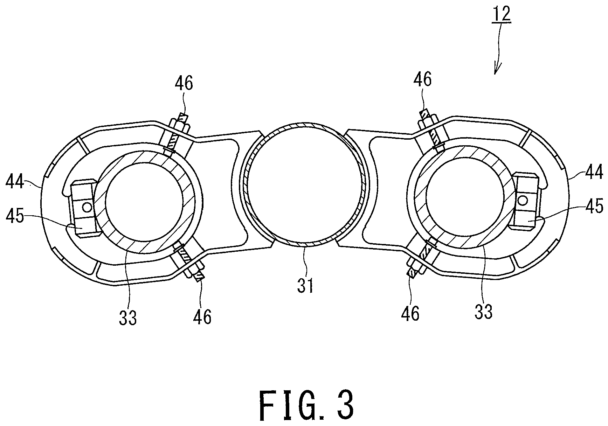

The riser pipe 31 of the jet pump 12 is fixed to and supported by a riser brace 43 welded to the inner wall of the reactor pressure vessel 13. As shown in Fig. 3, the riser brackets 44 that secure the inlet mixer pipes 33 are fixed on the opposite sides of the riser pipe 31. The inlet mixer pipe 33 is supported at three points on and fixed to the riser bracket 44 by a wedge 45 and set screws 46.

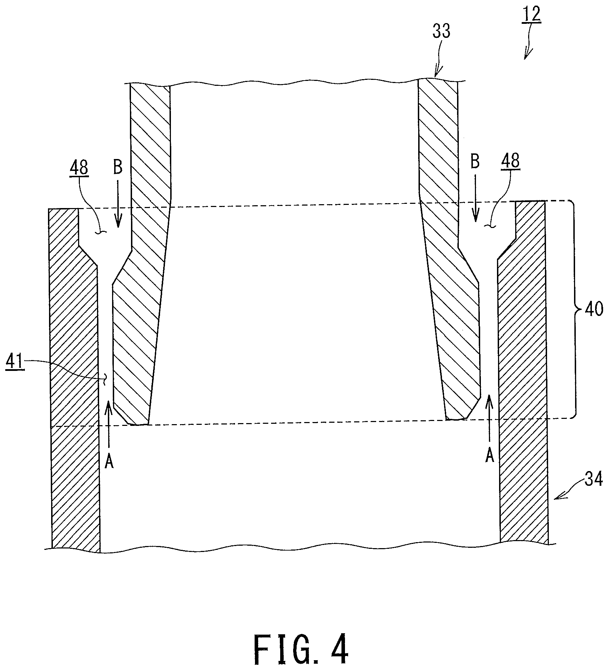

The inlet mixer pipe 33 has a swelling portion at the lower end thereof. As shown in Fig. 4, the lower portion of the inlet mixer pipe 33 is fitted into the upper portion of the diffuser 34 to form the slip joint 40. The slip joint 40 is provided with a slight clearance (slip clearance 41) so as to absorb thermal expansion and secure an allowance in adjustment during installation, and a flow channel is formed by this clearance in the slip joint 40. In the slip clearance 41, which is formed in the slip joint 40 between the inlet mixer pipe 33 and the diffuser 34, a forward leak flow A is generated as a clearance flow due to a fluid feeding pressure in the jet pump 12.

The slip clearance 41 has an expanding clearance flow channel shape that gradually expands as it goes on a downstream side of the leak flow A. In the case where the slip clearance 41 constitutes the expanding clearance flow channel shape, the additive damping of the leak flow A likely tends to serve as a negative damping force.

As an actual phenomenon, when the flow rate of the leak flow A exceeds a certain limit value, the flow of the fluid becomes unstable, and a vibration having a large amplitude referred to as a self-excited vibration occurs. To the contrary, in the case where the leak flow A constitutes a tapered clearance flow channel shape that tapers as it goes in the direction of the leak flow A, the additive damping of the leak flow A serves as a positive damping force, and the self-excited vibration is suppressed.

The slip clearance 41 of the slip joint 40 forming the mechanical fitting section 39 between the inlet mixer pipe 33 and the diffuser 34 has a width of 1 mm or less, preferably a width of 0.13 mm to 0.3 mm. With such a configuration, although the flow rate of the leak flow A in the expanding clearance flow channel 48 through the slip clearance 41 is as low as approximately 0.1% or less of the total flow rate of the jet pump 12, several tens of liters per minute to several hundreds of liters per minutes of the leak flow is still present. This leak flow A may cause a self-excited vibration.

Further, in a rare case, a plant is operated with only one reactor recirculation pump, which is referred to as single-pump operation. In an operation of such structure, the leak flow in the slip joint 40 may constitutes a backward flow (B) heading from the outside toward the inside of the jet pump 12, instead of the forward flow (A) heading from the inside toward the outside of the jet pump 12. This backward leak flow B may also occur during the low-flow operation of the reactor recirculation pump 26.

The flow channel that is formed into a tapered shape along the forward leak flow A is ineffective against the backward leak flow B.

It is therefore necessary to prevent occurrence of self-excited vibrations caused by the leak flows A and B flowing through the slip joint 40 on the assumption of both the forward and backward flows.

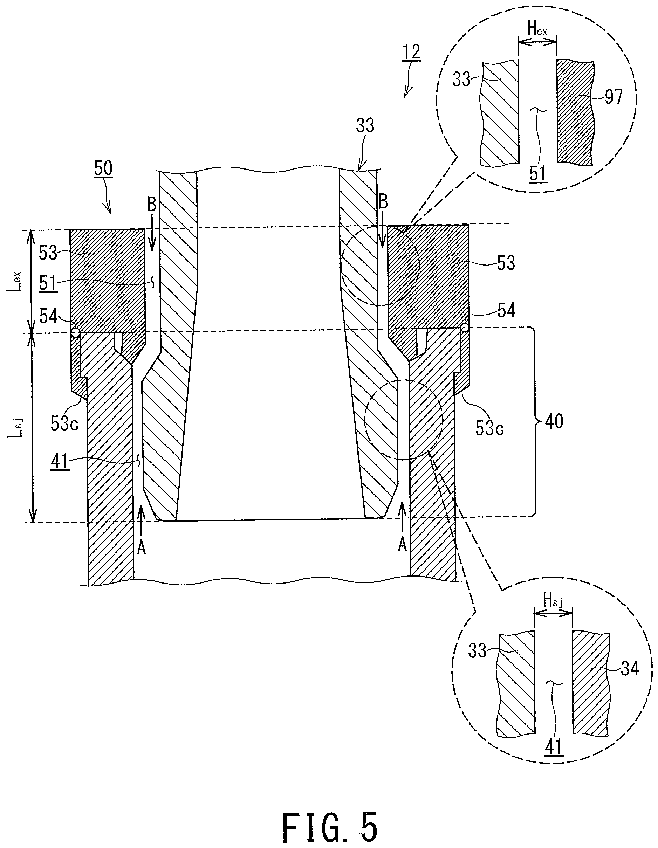

In consideration of the above circumstances, in the first embodiment of the preset invention, there is provided a vibration suppressing device 50 which is installed on an upper portion of the diffuser 34 as shown in Fig. 5 in order to prevent self-excited vibrations in both cases of a forward flow and a backward flow from causing.

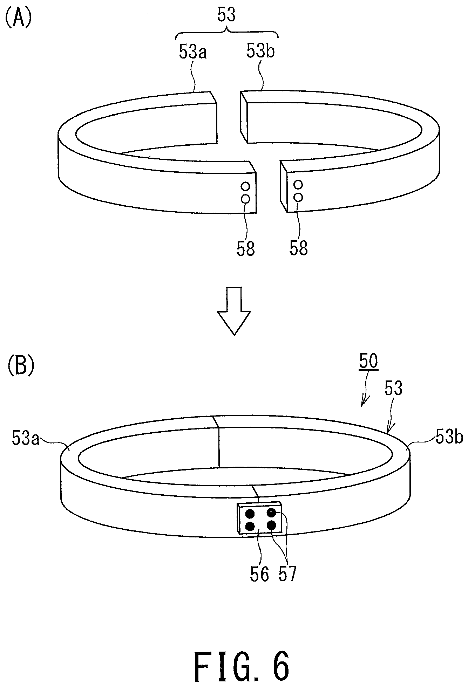

The vibration suppressing device 50 constitutes and provides an extension flow channel 51 extending from the expanding clearance flow channel 48 of the slip joint 40 on the top portion of the diffuser 34. As shown in Fig. 6, the vibration suppressing device 50 includes an extension sleeve 53 formed by two semi-cylindrical sleeve members 53a and 53b which are fixed to each other by fastening plates 56 applied to the outside of the junctures of the sleeve members and bolts 57. To prevent liquid leakage, the junctures may have various shapes other than the flat surface, such as a stepped shape.

The extension flow channel 51 is formed between the inner peripheral surface of the extension sleeve 53 and the outer peripheral surface of the inlet mixer pipe 33. The extension sleeve 53 is inserted so as to come into close contact with the diffuser 34 at the lower end of the expanding clearance flow channel 48.

The extension sleeve 53 includes a retaining portion 53c connected thereto by means of screw 54. The extension sleeve 53 is kept in close contact with the diffuser 34 by engaging the retaining portion 53c with a protrusion formed to the top portion of the diffuser 34. It is also possible to enhance the degree of close contact by arranging a metal seal in a contacting area between the diffuser 34 and the extension sleeve 53.

The inserted extension sleeve 53 narrows the expanding clearance flow channel 48 toward the outer peripheral surface side of the inlet mixer pipe 33. Further, although it may be desired that the flow channel width of the flow channel formed by narrowing the expanding clearance flow channel 48 is constant, it is not absolutely necessary as long as the flow channel shape does not have a protrusion etc. which generates a positive or negative damping force.

This narrowed flow channel is extended by the extension sleeve 53 smoothly along the outer peripheral surface of the inlet mixer pipe 33 beyond the top portion of the diffuser 34. The extended extension flow channel 51 is formed so as to maintain a constant flow channel width $H_{ex}$.

By extending the slip clearance 41 with such shape of extension, the conditions of expansion and tapering of the flow channel are equal to each other between the cases of the forward leak flow and the backward leak flow. That is, neither the extension flow channel 51 nor the expanding clearance flow channel 48 is expanded or tapered, and hence, the leak flows A and B can be maintained in a stable state regardless of the flow direction.

Herein, a relative flow channel length L and a relative flow channel width H are defined by the following Expression (1) and Expression (2), respectively:

$$L = L_{ex}/L_{sj} \quad (1)$$

$$H = H_{ex}/H_{sj} \quad (2)$$

where $L_{ex}$ represents the flow channel length of the extension flow channel 51, $L_{sj}$ represents the flow channel length of the slip clearance 41, and $H_{sj}$ represents the minimum flow channel width of the slip clearance 41.

The expression shows that if the relative flow channel length L becomes larger, the flow channel length $L_{ex}$ of the extension flow channel 51 becomes larger relative to the flow channel length $L_{sj}$ of the slip clearance. This means that the structural influence of the slip joint 40 on positive or negative damping force becomes larger.

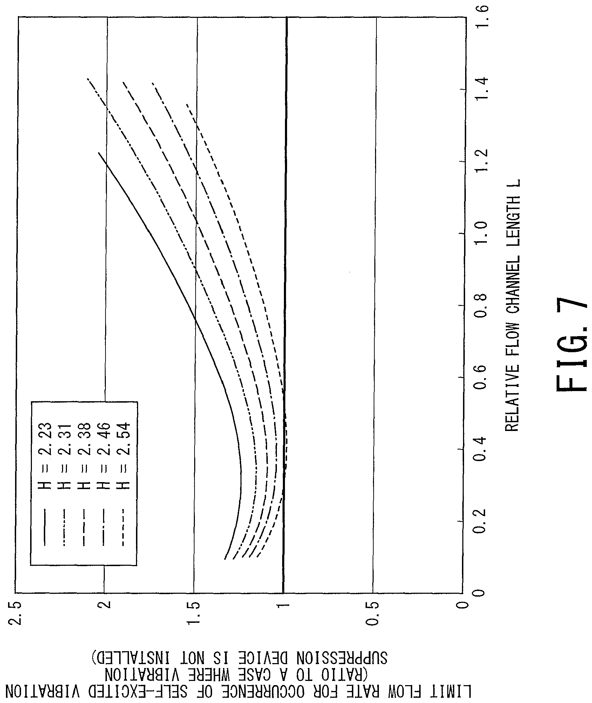

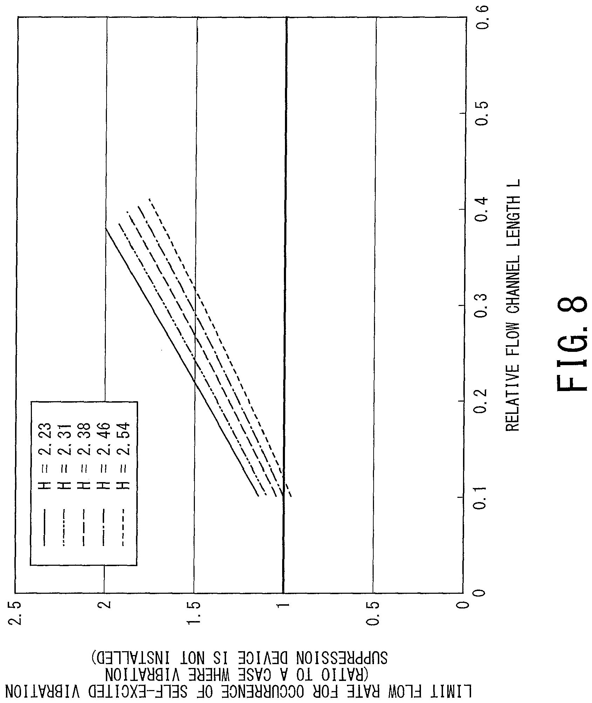

Fig. 7 is a graph representing the relationship, in the case of a forward flow, between the relative flow channel length L and a limit flow rate for occurrence of a self-excited vibration, where the relative flow channel width H is specified. With the relative flow channel width H as a parameter, the flow rate of the leak flow A at which a self-excited vibration starts to occur (limit flow rate for occurrence of a self-excited vibration) in the case where the relative flow channel length L varies was estimated by the theoretical analysis. Fig. 8 is a graph representing the relationship, in the case of the backward flow, between the relative flow channel length L and the limit flow rate for occurrence of a self-excited vibration, where the relative flow channel width H is specified.

Fig. 8 shows results of the theoretical analysis conducted to the case of the backward flow under the same conditions as those in the case of Fig. 7.

The ordinates of both Fig. 7 and Fig. 8 indicate the relative value of the limit flow rate in the case where the vibration suppressing device 50 is mounted against the case where it is not mounted. In other words, these graphs show that, when the limit flow rate for occurrence of the self-excited vibration exceeds 1, the limit flow rate for occurrence of the self-excited vibration is raised by the vibration suppressing device 50.

With reference to Fig. 7, when the relative flow channel width H is 2.46 or less, the limit flow rate for occurrence of the self-excited vibration is always 1 or larger regardless of the relative flow channel length L. Therefore, the relative flow channel width H can be set to a value larger than 0 and not larger than 2.46.

Thus, as can be seen from Fig. 7 and Fig. 8, when both the conditions, that the relative flow channel width H is 0 or larger and not larger than 2.46 and that the relative flow channel length is 0.1 or larger, are satisfied, the self-excited vibration suppression effect obtained by mounting the vibration suppressing device 50 can be exerted in both cases of the forward flow and the backward flow.

Since the riser bracket 44 is disposed on the upper side of the slip joint 40, the upper end of the extension flow channel 51 is positioned at a level below the lower surface of the riser bracket 44.

Accordingly, it is possible to suppress the vibration without causing the negative damping force to act on neither of the forward and backward leak flows A and B flowing through the extension flow channel 51 by extending the slip clearance 41 with the extension flow channel 51 having the constant flow channel width $H_{ex}$. Moreover, since the location of the extension flow channel 51 can extend the length of the clearance flow channels 41 and 51 as a whole, the pressure loss of the leak flows A and B in the slip clearance 41, which is originally large, is further increased.

Thus, the flow rate of the leak flows A and B flowing through the clearance flow channels 41 and 51 can be reduced, and hence, the self-excited vibrations can be suppressed.

In the first embodiment described above, the vibration suppressing device 50 is mounted to the upper portion of the diffuser 34 of the jet pump 12, and accordingly, it is not necessary to modify the shape of the inlet mixer pipe 33 in order to form the extension flow channel 51, and when the vibration suppressing device 50 is mounted it is not necessary to replace the inlet mixer pipe 33. That is, the hydrodynamic characteristics of the jet pump 12 are maintained even if the occurrence of the self-excited vibrations is suppressed.

The hydrodynamic characteristics of the jet pump 12 correspond to MN characteristics of the jet pump 12 and evaluated in terms of the magnitude of the MN ratio, which indicates how much pump driving is needed for a required flow rate of the nuclear power plant.

It is further to be noted that the MN characteristics indicate a relationship between the M ratio indicating the total flow rate to the driving flow rate, and the N ratio indicating the lift of the jet pump 12 to the driving lift.

More specifically, the performance of the jet pump 12 can be indicated by the flow rate ratio (M ratio = Qs/Qn) or the pressure ratio (N ratio = (Pd-Ps)/(Pn-Pd)). In addition, the efficiency of the jet pump 12 can be indicated by $\eta$ = M ratio x N ratio x 100 (%). Reference character P denotes a pressure (total pressure), and reference character Q denotes a flow rate. Suffixes n, s and d denote nozzle flow (driving flow), sucked-in flow (driven flow), and diffuser flow (discharge flow), respectively.

As shown in Fig. 6, the vibration suppressing device 50 has a dividable structure so that it can be mounted to the inlet mixer pipe 33 so as to surround it in an annular configuration. The sleeve members 53a and 53b of the vibration suppressing device 50 are formed with the bolt holes 58 and thus fastened to each other with the fastening plates 56 and the bolts 57 after the vibration suppressing device 50 is placed on the top portion of the diffuser 34. According to such configuration, the vibration suppressing device 50 can be mounted or installed without removing the inlet mixer pipe 33 from the diffuser 34.

In the vibration suppressing device 50 according to the first embodiment, the extension flow channel 51 of the extension sleeve 53 is configured so that the total additive damping by the fluid in the clearance flow channel 41 and the extension flow channel 51 is positive. The additive damping by the fluid can be determined from the relationship between the fluid inertia (fluid inertial force) of the clearance flow (minute flow, leakage flow) in the clearance flow channels 41 and 51 and the flow channel resistance (force). If the additive damping by the fluid is positive, no self-excited vibration occurs.

Furthermore, in the vibration suppressing device 50 according to the first embodiment, the extension flow channel 51 of the extension sleeve 53 is configured so that any condition under which the additive damping by the fluid in the clearance flow channel 41 and the flow channel 51 in the extension sleeve 53 is negative is eliminated, and any condition under which the additive damping by the fluid is negative is excluded from the operational conditions of the actual nuclear power plant.

According to the first embodiment mentioned hereinabove, the following advantageous effects are be further attainable.

That is, the allowance for the self-excited vibrations can be increased by raising the limit flow rate to occurrence of the self-excited vibration regardless of occurrence of the forward leak flow A or the backward leak flow B by the feeding pressure inside the jet pump 12 in the slip joint 40 that couples the inlet mixer pipe 33 and the diffuser 34 to each other.

Moreover, since the location of the extension flow channel 51 elongates the length of the clearance flow channels 41 and 51 as a whole and the pressure loss of the leak flows A and B increases, the flow rate of the leak flows A and B can also be reduced.

The self-excited vibration in the slip joint 40 can be suppressed by each of the above-described effects. Moreover, according to the first embodiment, there is no need to modify the shapes of the inlet mixer pipe 33 and the diffuser 34 in the slip joint 40 constituting a coupling portion therebetween. That is, since when the vibration suppressing device 50 is mounted, it is not necessary to replace the inlet mixer pipe 33 or the diffuser 34, the hydrodynamic characteristics of the jet pump 12 can be maintained, thus being also effective and advantageous.

[Second Embodiment]

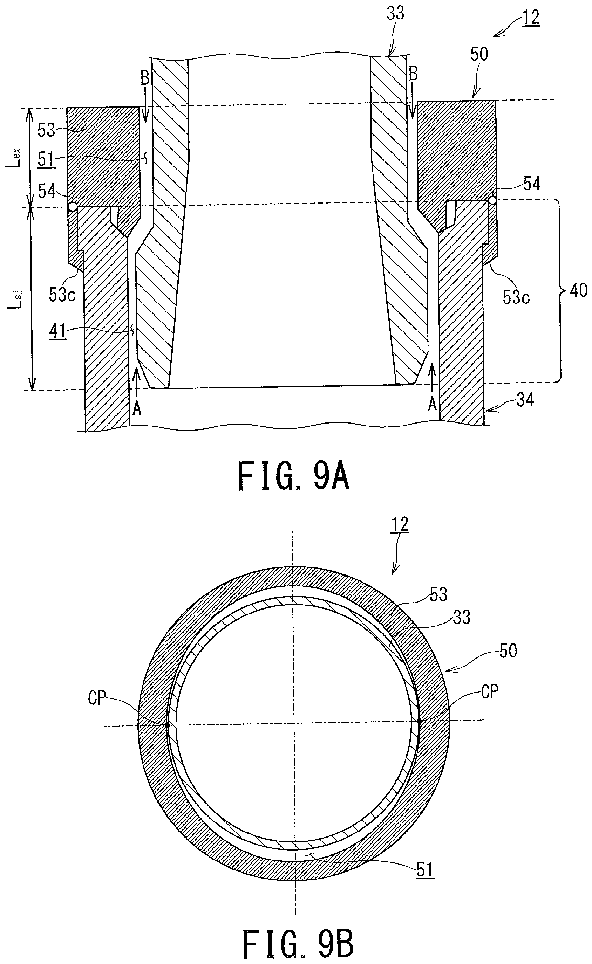

Hereunder, a second embodiment of the present invention will be described with reference to Fig. 9A and 9B. In the following description of the second embodiment, the configuration of the boiling water reactor 10 according to the second embodiment is generally the same as that of the BWR shown in Figs. 1 and 2, and therefore, the same components as those in the first embodiment will be denoted by the same reference numerals, and redundant description thereof will be simplified herein.

Fig. 9A is a partial vertical sectional view of a vibration suppressing device 50 for a jet pump 12 according to the second embodiment installed in the BWR 10. As like as the first embodiment, the vibration suppressing device 50 for the jet pump 12 according to the second embodiment includes the slip joint 40 provided at the coupling portion of the inlet mixer pipe 33 and the diffuser 34 and an extension sleeve 53 disposed on the top portion of the diffuser 34.

The vibration suppressing device 50 according to the second embodiment is mounted on the upper portion of the diffuser 34 of the jet pump 12 so as to form the extension flow channel 51 which extends the expanding clearance flow channel 48 of the slip joint 40. The extension flow channel 51 has a constant flow channel width $H_{ex}$ for both the forward and backward flow leaks A and B, which is the same feature as with the first embodiment.

In the second embodiment, on the other hand, the extension sleeve 53 has an imperfect circular shape such as an elliptic shape as shown in the top plan view of the cross-section shown in Fig. 9B. That is, the flow channel width $H_{ex}$ which is a constant value along the flow direction of the leak flow A varies in the circumferential direction of the outer peripheral surface of the inlet mixer pipe 33. The extension sleeve 53 is installed with a short diameter portion of the imperfect circular shape thereof in contact with the inlet mixer pipe 33 at one or more points of contact CP. The number of points of contact CP may be only one, for example, at the time of initial installation time and may increase to a plural number due to thermal expansion of the inlet mixer pipe 33 or the diffuser 34 during operation of the jet pump 12.

If the extension sleeve 53 has the point of contact CP with the inlet mixer pipe 33, the extension sleeve 53 is subjected to a structural damping force against vibration due to the contact with the inlet mixer pipe 33, while keeping mechanical contact with the inlet mixer pipe 33.

That is, the point of contact CP provides not only the effect of fixing the extension sleeve 53 to the inlet mixer pipe 33, but also the vibration suppression effect by acting as a resistance through mechanical contact when the vibration occurs. In addition, the installation posture and position of the extension sleeve 53 can be easily fixed by contacting the extension sleeve 53 to the inlet mixer pipe 33 at a predetermined point of contact CP, and therefore, the extension sleeve 53 can be more easily installed or mounted.

Accordingly, as like as the effects of the first embodiment, the allowance for the self-excited vibrations can be improved and the self-excited vibrations can be suppressed. The flow channel length $L_{ex}$ of the extension flow channel 51 also satisfies the conditions given in the first embodiment.

Further, the vibration is also suppressed by the effect of the positive damping force of a fluid even in a case where the extension sleeve 53 is not in contact with the inlet mixer pipe 33. However, if the extension sleeve 53 is in contact with the inlet mixer pipe 33, the suppression effect can be further improved because of the addition of the structural positive damping force due to the mechanical contact.

Furthermore, if a lateral load is exerted on the inlet mixer pipe 33 at the point of contact CP, the lateral load serves as a resistive force against the vibration of the inlet mixer pipe 33, which advantageously reduces the amplitude of the vibration, thus being also effective.

According to the second embodiment, the following effects will be further attained.

That is, at the time when the vibration suppressing device 50 is mounted, it is not necessary to modify the shapes of the inlet mixer pipe 33 and the diffuser 34, and hence not necessary to replace or change them, so that the hydrodynamic characteristics of the jet pump 12 is maintained, and the same effects and advantages as those of the first embodiment can be also attained.

In addition, according to the second embodiment, it is possible to increase the allowance for the self-excited vibrations and improve the vibration suppressing effect by raising the limit flow rate of the leak flows A and B for occurrence of the self-excited vibration in both cases of a forward flow and a backward flow caused by the feeding pressure of the jet pump 12 in the slip joint 40 that couples the inlet mixer pipe 33 and the diffuser 34 to each other.

It is further to be noted that although several embodiments of the present invention have been described above, these embodiments are given for illustrative purposes and are not intended to limit the scope of the present invention, which is defined in the attached claims. For example, in the embodiments of the present invention described above, the extension sleeve 53 of the vibration suppressing device is composed of two semi-cylindrical sleeve members 53a, 53b. However, the extension sleeve 53 may be composed of three or more divisional sleeve members or a single cylindrical sleeve member. In the case where the extension sleeve 53 is a single cylindrical sleeve member, the fastening means is omitted. Mounting of the extension sleeve 53 onto the inlet mixer pipe 33 can be easily achieved by raising and lowering the inlet mixer pipe 33 with respect to the diffuser 34.

## Claims

1. A vibration suppressing system comprising a vibration suppressing device (50) and a jet pump (12), wherein the jet pump (12) is located in a reactor pressure vessel (13) of a boiling water reactor (10) and provided with an inlet mixer pipe (33) coupled to a riser pipe (31) and a diffuser (34) coupled to the inlet mixer pipe (33) by means of a slip joint (40), and an inlet nozzle (35), wherein the vibration suppressing device (50) is provided with an extension sleeve (53) disposed on an upper portion of the diffuser (34) of the jet pump (12) and constitutes an extension flow channel (51) on a downstream side of a forward leak flow in a slip clearance (41) heading from the inside toward the outside of the jet pump (12) formed between an inner peripheral surface of the diffuser (34) and an outer peripheral surface of the inlet mixer pipe (33), and the extension sleeve (53) has a shape such that the extension flow channel (51) has a region in which a flow channel width $(H_{ex})$ thereof is constant over a length and **characterized in that** the flow channel width $(H_{ex})$ of the extension flow channel (51) is more than zero and not more than 2.46 times as large as a minimum flow channel width $(H_{sj})$ of the slip clearance (41).

2. The vibration suppressing system according to any preceding claim, wherein the extension flow channel (51) has a flow channel length of 0.1 or more than a flow channel length of the slip clearance (41), and an upper end of the extension flow channel (51) is positioned in level below a lower surface of a riser bracket (44).

3. The vibration suppressing system according to any preceding claim, wherein the inner peripheral surface of the extension sleeve (53) has an elliptic cross sectional shape, and the flow channel width $(H_{ex})$ of the extension flow channel (51) varies in a circumferential direction of the outer peripheral surface of the inlet mixer pipe (33).

4. The vibration suppressing system according to any preceding claim, wherein the extension sleeve (53) has at least one point of contact with the inlet mixer pipe (33).

## Patentansprüche

1. Schwingungsunterdrückungssystem, umfassend eine Schwingungsunterdrückungsvorrichtung (50) und eine Strahlpumpe (12), wobei die Strahlpumpe (12) in einem Reaktordruckkessel (13) eines Siedewasserreaktors (10) angeordnet und mit einem Einlassmischrohr (33), welches mit einem Steigrohr (31) verbunden ist, und einem Diffusor (34), welcher mit dem Einlassmischrohr (33) mittels eines Gleitgelenks (40) verbunden ist, und einer Einlassdüse (35) versehen ist, wobei die Schwingungsunterdrückungsvornchtung (50) eine Verlängerungshülse (53) aufweist, welche auf einem oberen Abschnitt des Diffusor (34) der Strahlpumpe (12) angeordnet und einen Verlängerungsstromkanal (51) auf einer stromabwärtigen Seite eines vorderen Leckstroms in einem Schlupfzwischenraum (41) bildet, welcher von der Innenseite zur Außenseite der Strahlpumpe (12) gerichtet ist, wobei der Schlupfinnenraum zwischen einer inneren Umfangsfläche des Diffusors (34) und einer äußeren Umfangsfläche des Einlassmischrohrs (33) gebildet ist, und wobei die Verlängerungshülse (53) eine solche Form aufweist, dass der Verlängerungsstromkanal (51) einen Bereich aufweist, in welchem dessen Stromkanalbreite $(H_{ex})$ über eine Länge konstant ist und **dadurch gekennzeichnet, dass** die Stromkanalbreite $(H_{ex})$ des Verlängerungsstromkanals (51) größer Null und kleiner gleich 2,46 Mal eine Mindestbreite $(H_{sj})$ des Stromkanals des Schlupfzwischenraums (41) ist.

2. Schwingungsunterdrückungssystem nach einem der vorhergehenden Ansprüche, wobei der Verlängerungsstromkanal (51) eine Stromkanallänge aufweist, welche 0,1 Mal oder größer als die Stromkanallänge des Schlupfzwischenraums (41) ist, und wobei ein oberes Ende des Verlängerungsstromkanals (51) auf einer Ebene unterhalb einer unteren Oberfläche eines Steigbügels (44) angeordnet ist.

3. Schwingungsunterdrückungssystem nach einem der vorhergehenden Ansprüche, wobei die innere Umfangsfläche der Verlängerungshülse (53) einen elliptisch geformten Querschnitt aufweist, und die Stromkanalbreite ($H_{ex}$) des Verlängerungsstromkanals (51) sich in einer Umfangsrichtung der äußeren Umfangsfläche des Einlassmischrohrs (33) verändert.

4. Schwingungsunterdrückungssystem nach einem der vorhergehenden Ansprüche, wobei die Verlängerungshülse (53) zumindest einen Berührungspunkt mit dem Einlassmischrohr (33) aufweist.

## Revendications

1. Système de suppression de vibrations comprenant un dispositif de suppression de vibrations (50) et une pompe à jet (12), dans lequel la pompe à jet (12) est située dans une cuve sous pression de réacteur (13) d'un réacteur à eau bouillante (10) et est munie d'un tuyau mélangeur d'entrée (33) qui est couplé à un tuyau montant (31) et d'un diffuseur (34) qui est couplé au tuyau mélangeur d'entrée (33) au moyen d'un joint coulissant (40), et d'une buse d'entrée (35), dans lequel le dispositif de suppression de vibrations (50) est muni d'une gaine d'extension (53) qui est disposée sur une partie supérieure du diffuseur (34) de la pompe à jet (12) et qui constitue un canal d'écoulement d'extension (51) sur un côté aval d'un écoulement de fuite vers l'avant dans un jeu de coulissement (41) qui est dirigé depuis l'intérieur en direction de l'extérieur de la pompe à jet (12) et qui est formé entre une surface périphérique interne du diffuseur (34) et une surface périphérique externe du tuyau mélangeur d'entrée (33), et la gaine d'extension (53) présente une forme qui est telle que le canal d'écoulement d'extension (51) comporte une région dans laquelle sa largeur de canal d'écoulement ($H_{ex}$) est constante sur une longueur et **caractérisé en ce que** la largeur de canal d'écoulement ($H_{ex}$) du canal d'écoulement d'extension (51) est plus grande que zéro fois et pas plus grande que 2,46 fois une largeur de canal d'écoulement minimum ($H_{sj}$) du jeu de coulissement (41).

2. Système de suppression de vibration selon la revendication 1, dans lequel le canal d'écoulement d'extension (51) présente une longueur de canal d'écoulement qui vaut 0,1 fois une longueur de canal d'écoulement du jeu de glissement (41) ou plus, et une extrémité supérieure du canal d'écoulement d'extension (51) est positionnée, en termes de niveau, au-dessous d'une surface inférieure d'un support de tuyau prolongateur (44).

3. Système de suppression de vibration selon l'une quelconque des revendications précédentes, dans lequel la surface périphérique interne de la gaine d'extension (53) présente une forme en coupe transversale elliptique, et la largeur de canal d'écoulement ($H_{ex}$) du canal d'écoulement d'extension (51) varie dans une direction circonférentielle de la surface périphérique externe du tuyau mélangeur d'entrée (33).

4. Système de suppression de vibration selon l'une quelconque des revendications précédentes, dans lequel la gaine d'extension (53) comporte au moins un point de contact avec le tuyau mélangeur d'entrée (33).

FIG. 1

FIG. 2

FIG. 3

FIG. 4

FIG. 5

(A)

53
53a  53b

58  58

(B)
50
53
53a  53b

56 57

# FIG. 6

FIG. 7

RELATIVE FLOW CHANNEL LENGTH L

LIMIT FLOW RATE FOR OCCURRENCE OF SELF-EXCITED VIBRATION
(RATIO TO A CASE WHERE VIBRATION
SUPPRESSION DEVICE IS NOT INSTALLED)

H = 2.23
H = 2.31
H = 2.38
H = 2.46
H = 2.54

16

FIG. 8

FIG. 9A

FIG. 9B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010242581 A

- US 2002106281 A